Europäisches Patentamt

(19) European Patent Office

Office européen des brevets

(11) Numéro de publication: **0 081 399
B1**

(12) # FASCICULE DE BREVET EUROPEEN

(45) Date de publication du fascicule du brevet:
**08.05.85**

(51) Int. Cl.⁴: **B 60 Q 1/06**

(21) Numéro de dépôt: **82401992.1**

(22) Date de dépôt: **28.10.82**

(54) **Dispositif de commande de variation d'inclinaison des projecteurs de véhicules automobiles.**

(30) Priorité: **26.11.81 FR 8122127**

(43) Date de publication de la demande:
**15.06.83 Bulletin 83/24**

(45) Mention de la délivrance du brevet:
**08.05.85 Bulletin 85/19**

(84) Etats contractants désignés:
**DE GB IT**

(56) Documents cités
**FR - A - 2 403 237**

(73) Titulaire: **DUCELLIER & Cie, Echat 950, F-94024 Créteil Cedex (FR)**

(72) Inventeur: **Mikolajczak, Félix, 55, rue des Bertagnes, F-77950 Rubelles (FR)**
Inventeur: **Harrand, Philippe, 2, square Vitruve, F-75020 Paris (FR)**
Inventeur: **Cayeux, Jean-Paul, 4, Av. Ribot le Plessis Bouchard, F-95130 Franconville (FR)**

(74) Mandataire: **Habert, Roger, DUCELLIER & Cie 2, rue Boulle Echat 950, F-94024 Creteil Cedex (FR)**

BUNDESDRUCKEREI BERLIN

## Description

Levier d'un dispositif de commande de variation d'inclinaison des projecteurs de véhicules automobiles, notamment pour la commande simultanée du basculement de deux projecteurs indépendants disposés à proximité l'un de l'autre, tels qu'on projecteur dit »CODE« et un projecgteur dit »ROUTE«.

Pour réaliser un tel basculement il est connu dans le brevet FR-A-2 233 822, d'utiliser un levier de renvoi commun en forme de fourche dont les extrémités des branches coopérent chacune avec l'un des projecteurs considérés.

Il peut être très avantageux de réaliser cette commande de basculement au niveau de certaines vis de réglage initial d'orientation dedits projecteurs, ceci afin de limiter le nombre de points de fixation et d'articulation par projecteur.

Or dans le brevet mentionné ci-dessus le levier de renvoi de commande est seulement offecté au basculement simulatné des projecteurs en agissant sur des butées d'appui solidaires desdits projecteurs, de plus il ne comporte aucune souplesse susceptible d'emmagasiner les réglages initiaux indépendants, les tolérances de fabrication, d'assemblage et de réglage, ce qui peut êtrenéfaste pour le bon fonctionnement d'un dispositif de commande équipé d'un tel levier.

La présente invention a pour but de remédier à ces inconvénients et concerne à cet effet un levier d'un dispositif de commande de variation d'inclinaison des projecteurs de véhicules automobiles, notamment pour la commande simultanée du basculement de deux projecteurs indépendants disposés proches l'un de l'autre sur un support fixé par des vis de réglage qui se déplacent dans des écrous, au moyen dudit levier de commande unique relié à tourillonnement au support fixé, caractérisé en ce que le levier comporte au moins un bras de commande relié aux vis de réglage par un dispositif à cardan.

La description qui va suivre en regard des schémas annexés fera mieux comprendre comment l'invention peut être réalisée.

La figure 1 représente en vue de dessus un dispositif de commande de variation d'inclinaison de projecteurs équipé d'un levier conforme à l'invention.

La figure 2 représente en vue frontale, suivant la flèche F de la figure 1, le levier de commande suivant un mode de réalisation.

La figure 3 représente le levier de commande suivant la coupe III III de la figure 2.

La figure 4 représente le levier de commande suivant la coupe IV IV de la figure 2.

La figure 5 représente une variante d'obtention d'un levier conforme à l'invention, dans laquelle la partie droite représente une réalisation possible, et la partie gauche une autre réalisation.

La figure 6 représente un levier suivant la coupe VI VI de la figure 5.

Les projecteurs 1 et 2, respectivement un projecteur pour le faisceau »route« et l'autre pour le faisceau »code«, sont assemblés indépendants et à proximité l'un de l'autre sur une même platine support 4 au moyen de vis 7 qui comportent des rotules 21 sur lesquelles lesdits projecteurs sont encliquetés. Sur cette platine est articulé un levier de commande (3) qui agit simultanément sur les deux projecteurs.

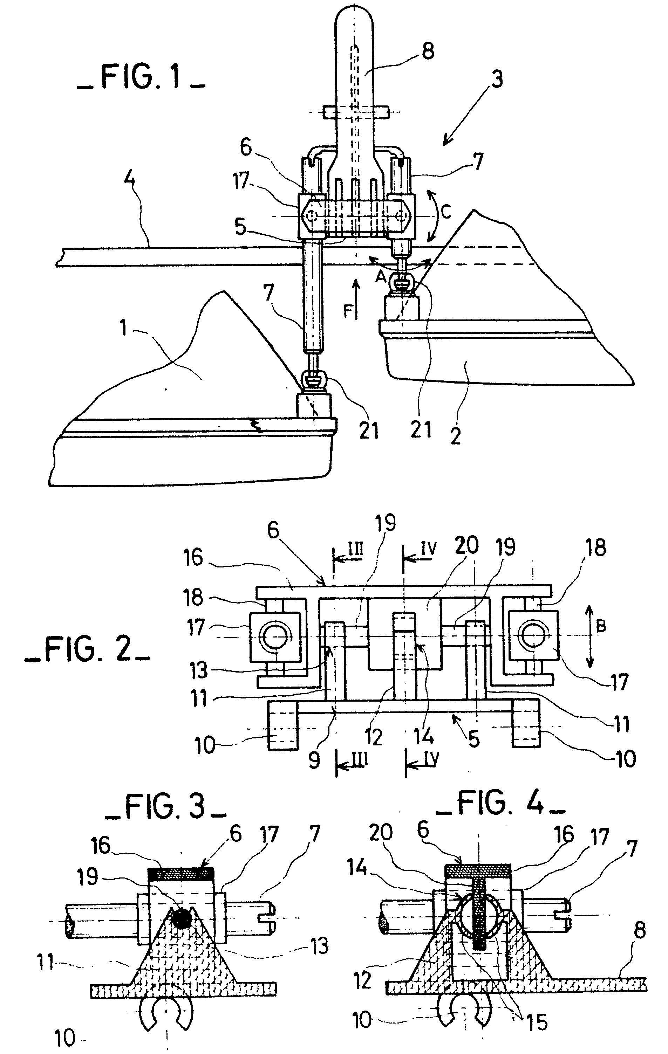

Conformément à l'invention et suivant un mode de réalisation le levier de commande 3, des figures 2 à 4 comporte un étrier 5 et un palonnier 6 qui relient les bras de commande 8 aux vis de réglage 7 par un dispositif à cardan.

Le bras de commande 8 est solidaire de l'étrier 5 et les vis de réglage 7 sont maintenues dans des écrous 17 solidaires du palonnier 6.

Le palonnier 6 est constitué d'une armature 16 qui comporte d'une part des extrémités en forme de U ouverts vers l'extérieur dans lesquelles sont maintenus les écrous 17 par des liaisons verticales 18 et d'autre part en sa partie centrale, perpendiculairement aux bases de U et entre celles-ci, une joue 20 reliée aux dites bases par des tourillons 19.

Les liaisons 18 sont de section réduite et de préférence cylindrique de façon à pouvoir se déformer élastiquement sous l'action de forces représentées par les flèches A sur la figure 1.

L'étrier 5 est constitué d'une semelle 9 qui comporte sur un de ses côtés le bras de commande 8, qui est plus particulièrement un bras de commande manuel.

Sous la face inférieure de la semelle 9 sont réalisés deux crochets 10 en forme d'anneaux cylindriques fendus aptes à encliqueter sur des tourillons solidaires de la platine support 4.

Sur sa face supérieure la semelle 9 comporte trois joues parallèles perpendiculaires à l'axe de rotation des crochets 10, dont les deux extrêmes 11 comportentun berceau 13 des tourillons 19 du palonnier 6, et dont la troisième intermédiaire 12 est évidée en sa partie centrale et comporte à son extrémité libre une chape déformable élastiquement 14.

Les berceaux 13 sont des trous cylindiques fendus longidudinalement dans lesquelles s'encliquetent les tourillons 19.

La chape déformable élastiquement 14 se compose de deux demianneaux 15 suspendus face à face et écartés d'un espace au plus égal à l'épaisseur de la joue 20 du palonnier 6.

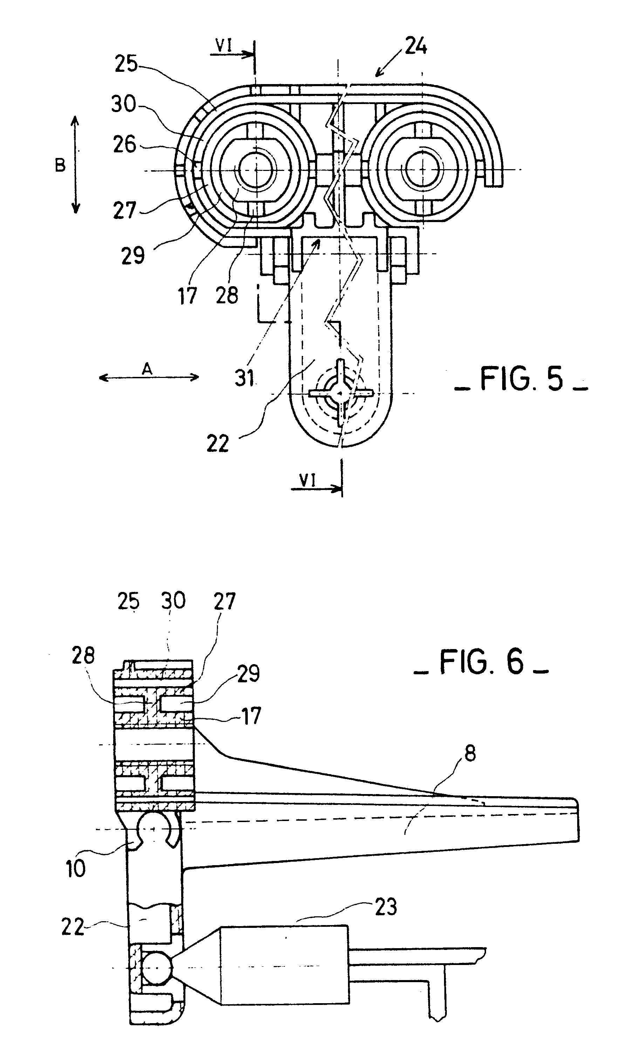

Suivant une variante comme représentée à la figure 5 l'étrier 5 peut aussi comporter un bras 22 susceptible de recevoir l'extrémité d'un transducteur 23 d'une commande à distance.

L'obtention du levier 3 s'effectue alors simplement par l'encliquetage des tourillons 19 du palonnier 6 dans les berceaux 13 de l'étrier 5, la joue 20 étant intercallée entre les deux demianneaux 15 de la chape 14.

Pour le bon fonctionnement d'un tel levier il est nécessaire que l'accouplement entre le palonnier et l'étrier soit rigide pour que toute action d'un des bras 8 ou 22 soit répercutée sur les écrous 17 et conséquemment sur les vis 7, mais il est indispensable, aussi que l'accouplement comporte une certaine souplesse susceptible d'absorber différents efforts notamment lors du montage des projecteurs 1 et 2 pour l'alignement de l'axe des vis 7 avec le siège de leur rotule 21 solidaire des projecteurs, ces efforts sont représentés par les flèches A, B, et C des figures 1 et 2.

De part la présence des tourillons 18 les vis 7 peuvent légérement être orientées suivant les lèches A sans préjudice pour la liaison entre l'étrier 5 et le palonnier 6.

Les vis 7 peuvent aussi être inclinées suivant les flèches B grâce aux tourillons 19 dans leur berceaux 13.

Il peut aussi apparaitre des efforts suivant les flèches C, les projecteurs n'étant pas assemblés simultanément, et dans ce cas l'étrier 5 et le palonnier 6 ne se trouvent pas dans un plan adéquat, la chape déformable élastiquement 14 assure alors un rappel automatique du palonnier 6 afin qu'il soit automatiquement replacé dans sa bonne orientation.

Suivant un autre mode de réalisation tel que représenté aux figures 5 et 6 le levier 24 est obtenu d'un seul tenant à partir d'une semelle 31 qui comporte comme celle de l'etrier 5 de la réalisation précédence des crochets 10, un bras 8 et peut comporter un bras 22; la semelle 31 supporte une armature 25 qui comporte de part et d'autre d'un axe de symétrie un anneau cylindrique 27 qui avec des tourillons 26 et 28 joue le rôle du cardan qui autorise les divers débattements angulaires des écrous 17. Chaque écrou 17 est relié concentriquement à l'anneau 27 correspondant par les tourillons 28 disposés verticalement, et chaque anneau 27 est relié à l'armature 25 par des tourillons 26 disposés horizontalement.

Les espaces libres 29 et 30 sont donc intercallès entre l'écrou 17 l'anneau 27 et l'armature 25 afin que d'une part l'écrou 17 puisse osciller dans l'anneau 27 grâce à l'espace 29, et que d'autre part l'anneau 27 puisse osciller dans l'armature 25 grâce à l'espace 30. Ainsi lors de l'inclinaison d'une vis 7 suivant la flèche A l'écrou correspondant 17 oscille dans l'anneau 27 grâce aux tourillons 28 déformables élastiquement, l'anneau 27 étant immobilisé par les tourillons 26 dans l'armature 25, et lors de l'inclinaison d'une vis 7 suivant la flèche B, l'écrou 17 et l'anneau 27 sont concentriques et fixes l'un par rapport à l'autre, l'ensemble défini par l'écrou 17 et l'anneau 27 peut donc pivoter dans l'espace 30 autour de l'axe des tourillons déformables élastiquement 26.

L'armature 25 peut se présenter soit suivant un ensemble fermé tel que représenté dans la partie gauche de la figure 5, soit ouvert et donc suspendu, tel que représenté dans la partie droite de ladite figure 5, par la partie centrale de l'armature réalisée entre les deux anneaux 27.

## Revendications

1. Levier d'un dispositif de commande de variation d'inclinaison des projecteurs de véhicules automobiles, notamment pour la commande simultanée du basculement de deux projecteurs (1 et 2) indépendants disposés prochesl'un de l'autre sur un support fixe (4) par des vis de réglage (7) qui se déplacent dans des écrous (17), au moyen dudit levier de commande unique (3) relié à tourillonnement au support fixe (4), caractérisé en ce que le levier (3) comporte au moins un bras de commande (8) relié aux vis de réglage (7) par un dispositif à cardan.

2. Levier selon la revendication 1 caractérisé en ce que le dispositif à cardan est constitué d'une part par un étrier (5) solidaire du bras (8) et qui comporte une partie des moyens de liaison (9, 10) ò tourillonnement du levier (3) au support fixe (4), et d'autre part par un palonnier (6) qui comporte les écrous (17), qui maintiennent les vis de réglage (7), et des tourillons (19) aptes à se loger dans des berceaux (13) de l'étrier (5).

3. Levier selon la revendication 2 caractérisé en ce que le palonnier (6) est constitué par une armature (16) qui comporte d'une part des extrémités en forme de U ouverts vers l'extérieur dans lesquelles sont maintenus les écrous (17) par des laisons verticales (18) de section réduite déformables élastiquement, et d'autre part en sa partie centrale, perpendiculairement aux bases des U et entre celles-ci, une joue (20) reliée aux dites bases par les tourillons (19).

4. Levier selon la revendication 2 caractérisé en ce que l'étrier (5), relié à tourillonnement au support (4) au moyen d'au moins un crochet (10) en forme d'anneau cylindrique fendu, est constitué d'une semelle (9) qui comporte, sur un de ses côtés le bras (8), sur une de ses faces au moins un crochet (10), et sur l'autre face trois joues (11 et 12) sensiblement parallèles dont les deux extrêmes (11) comportent le berceau (13) des tourillons (19) du palonnier (6) et dont la troisième intermédiaire (12) est évidée dans sa partie centrale et comporte à son extrémité libre une chape sphérique élastique (14) dans laquelle s'inserre la joue (20) du palonnier (6).

5. Levier selon la revendication 4 caractérisé en ce que la chape sphérique élastique (14) est constituée de deux demi-anneaux (15) suspendus face à face et écartés d'un espace au plus égal à l'épaisseur de la joue (20) du palonnier (6).

6. Levier selon la revendication 1 caractérisé en ce que le levier de commande (3) comporte un bras (22) apte à coopérer avec l'extrémité d'un transducteur (23) d'une commande à distance.

7. Levier selon la revendication 1 caractérisé en ce que le dispositif à cardan est constitué par des tourillons (26, 28) déformables élastiquement qui maintiennent suspendu, suivant deux directions orthogonales, l'une horizontale l'autre verticale, chaque écrou (17) de montage des vis de réglage (7) à l'untérieur d'une armature (25) dont la semelle (31) comporte une partie des moyens de liaison (10) à tourillonnement du levier au support fixe (4), un bras de commande manuel (8), et peut éventuellement comporter un bras (22) apte à coopérer avec l'extrémité d'un transducteur (23) d'une commande à distance.

**Patentansprüche**

1. Hebel einer Betätigungsvorrichtung zur Änderung der Neigung der Scheinwerfer von Kraftfahrzeugen, insbesondere zur gleichzeitigen Betätigung des Kippens von zwei unabhängigen Scheinwerfern (1 und 2), die nahe beeinander auf einer festen Auflage (4) mittels Stellschrauben (7) angeordnet sind, die sich in Muttern (17) mittels des einzigen Betätigungshebels (3) verstellen, der zum Drehen an der festen Auflage (4) befestigt ist, dadurch gekennzeichnet, daß der Hebel (3) zumindest einen Betätigungsarm (8) aufweist, der durch eine Kardanvorrichtung mit den Stellschrauben (7) verbunden ist.

2. Hebel nach Anspruch 1, dadurch gekennzeichnet, daß die Kardanvorrichtung zum einen durch einen Bügel (5), der fest mit dem Arm (8) verbunden ist, und einen Teil der Verbindungsmittel (9, 10) zum Drehen des Hebels (3) an der festen Auflage (4) umfaßt, und zum anderen durch eine Hebeleinrichtung (6) gebildet ist, die Muttern (17), die die Stellschrauben (7) festhalten, und Zapfen (19) umfaßt, die in Wiegelagern (13) des Bügels (5) gelagert sein können.

3. Hebel nach Anspruch 2, dadurch gekennzeichnet, daß die Hebeleinrichtung (6) durch einen Beschlag (16) gebildet ist, der zum einen Enden in U-Form, die nach außen offen sind und in denen die Muttern (17) durch elastisch verformbare vertikale Verbindungen (18) mit verkleinertem Querschnitt gehalten sind, und zum anderen in seinem zentralen Teil senkrecht zu den Basen des U und zwischen diesen ein Seitenteil (20) umfaßt, das mit den Basen durch die Zapfen (19) verbunden ist.

4. Hebel nach Anspruch 2, dadurch gekennzeichnet, daß der Bügel (5), der zum Drehen mit der Auflage (4) mittels zumindest eines Hakens (10) in Form eines geschlitzten zylindrischen Rings verbunden ist, durch eine Platte (9) gebildet ist, die auf einer ihrer Seiten den Arm (8), auf einer ihrer Vorderseiten zumindest einen Haken (10) und auf der anderen Vorderseite drei im wesentlichen parallele Seitenteile (11 und 12) umfaßt, von denen die beiden äußeren (11) das Wiegelager (13) der Zapfen (19) der Hebeleinrichtung (6) umfassen und von denen das dritte mittlere (12) in seinem zentralen Teil ausgehölt ist und an seinem freien Ende eine runde elastische Abdeckung (14) umfaßt, in der der Seitenteil (20) der Hebeleinrichtung (7) eingeführt ist.

5. Hebel nach Anspruch 4, dadurch gekennzeichnet, daß die runde elastische Abdeckung (14) durch zwei Halbringe (15) gebildet ist, die einander zugewandt und mit einem Abstand aufgehängt sind, der höchstens gleich der Dicke des Seitenteils (20) der Hebeleinrichtung (6) ist.

6. Hebel nach Anspruch 1, dadurch gekennzeichnet, daß der Betätigungsheben (3) einen Arm (22) umfaßt, der mit dem Ende eines Wandlers (23) einer Fernbedienung zusammenwirken kann.

7. Hebel nach Anspruch 1, dadurch gekennzeichnet, daß die Kardan-Vorrichtung durch elastisch deformierbare Zapfen (26, 28) gebildet ist, die längs zweier orthogonaler Richtungen, von denen eine horizontal und die andere vertikal ist, jede Mutter (17) zur Montage der Stellschrauben (7) im Inneren eines Beschlags (25) aufgehängt halten, dessen Platte (31) einen Teil der Verbindungsmittel (10) zum Drehen des Hebels auf der festen Auflage (4), einen Arm (8) zur manuellen Betätigung umfaßt und gegebenenfalls einen Arm (22) umfassen kann, der zum Zusammenwirken mit dem Ende eines Wandlers (23) einer Fernbedienung zusammenwirken kann.

**Claims**

1. Lever of a device for controlling the change of inclination of the headlamps of automobile vehicles, in particular for the simultaneous actuation of the dipping of two separate headlamps (1 and 2) arranged close to each other on a fixed support (4) by means of adjusting screws (7) which are displaced in nuts (17) by means of the said single control lever (3) pivotally coupled to the fixed support (4), characterised in that the lever (3) comprises at least one actuating arm (8) connected to the adjusting screws (7) by means of a universal joint device.

2. Lever according to claim 1, characterised in that the universal joint device is formed on the one hand by a yoke (5) integral with the arm (8) and which comprises a part of the pivotal connection means (9, 10) between the lever (3) and the fixed support (4), and on the other hand by a rocking lever (6) which comprises the nuts (17) which hold the adjusting screws (7) and pivot pins (19) able to be housed in support bearings (13) of the yoke (5).

3. Lever according to claim 2, characterised in that the rocking lever assembly (6) comprises a bearer frame (1) which on the one hand comprises U-shaped extremities open towards the outside and wherein are held the nuts (17) by means of resiliently deformable vertical links (18) of reduced cross-section, and on the other hand and in its central portion comprises a web (20) extending at right angles to and between the bases of the U-shaped extremities and coupled to the said bases by means of the pivot pins (19).

4. Lever according to claim 2, characterised in that the yoke (5) pivotally connected to the support (4) by means of at least one hook (10) in the form of a slotted cylindrical annulus, is formed by a base plate (9) which on one of its sides comprises the arm (8), on one of its surfaces at least one hook (10) and on the other surface three substantially parallel webs (11 and 12) whereof the two extreme webs (11) comprise the support bearings (13) of the pivot pins (19) of the rocking lever assembly (6) and whereof the third and intermediate web (12) is cut away in its central part and at its free extremity comprises a resilient spherical clamp (14) wherein is gripped the web (20) of the rocking lever (6).

5. Lever according to claim 4, characterised in that the resilient spherical clamp (14) comprises two partrings (15) suspended face to face and spaced apart by a gap equal to at most the thickness of the web (20) of the rocking lever assembly (6).

6. Lever according to claim 1, characterised in that the actuating lever (3) comprises an arm (22) able to co-operate with the extremity of a remote control transducer (23).

7. Lever according to claim 1, characterised in that the universal joint device is formed by resiliently deformable links (26, 28) which hold each nut (17) for receiving adjusting screws (7) suspended in two orthogonal directions, of which one is horizontal and the other is vertical, within a framework (25) whereof the base plate (31) comprises a part of the pivotal connection means (10) between the lever and the fixed support (4), a manual actuator arm (8), and may possibly comprise an arm (22) able to co-operate with the extremity of a remote control transducer (23).

0 081 399

_FIG. 1_

_FIG. 2_

_FIG. 3_

_FIG. 4_

7

_ FIG. 5 _

_ FIG. 6 _